# EUROPÄISCHE PATENTSCHRIFT

(11) **EP 2 662 936 B1**
(45) Veröffentlichungstag und Bekanntmachung des Hinweises auf die Patenterteilung: **26.11.2014**
(21) Anmeldenummer: 13001933.4
(22) Anmeldetag: 13.04.2013
(51) Int. Cl.: H01R 13/50, H02G 3/08

(54) **Vorrichtung zum elektrischen Verbinden von Hauptleitern eines Energieversorgungskabels mit jeweils mindestens einem Abzweigleiter**
Device for electrically connecting main conductors of power supply cables with at least one tap conductor
Dispositif pour relier électriquement des conducteurs principaux d'un câble d'alimentation en énergie avec au moins un conducteur de dérivation

(30) Priorität: 11.05.2012 DE 102012009405
(43) Veröffentlichungstag der Anmeldung: 13.11.2013
(73) Patentinhaber: Pfisterer Kontaktsysteme GmbH, 73650 Winterbach (DE)
(72) Erfinder: Frank, Erich, 73269 Hochdorf (DE)
(74) Vertreter: Bartels & Partner

(56) Entgegenhaltungen:
- DE-A1-102006 037 720
- US-A1- 2012 097 414

## Beschreibung

Die Erfindung betrifft eine Vorrichtung zum elektrischen Verbinden von mindestens zwei Hauptleitern eines Energieversorgungskabels mit jeweils mindestens einem Abzweigleiter, insbesondere eine Abzweigklemme für mehrphasige Niederspannungskabel.

Gattungsgemäße Vorrichtungen sind beispielsweise aus der DE 10 2006 037 720 A1 bekannt. Die bekannte Vorrichtung weist zwei durch eine Schraubverbindung verbindbare elektrisch isolierende Gehäuseteile auf, wobei für jede herzustellende Verbindung zwischen einem Hauptleiter und dem zugeordneten Abzweigleiter mindestens ein Kontaktelement in den Gehäuseteilen angeordnet ist. Vorzugsweise einstückig bildet jedes Gehäuseteil an einem axialen Ende eine Anschlagfläche aus, an den der Abzweigleiter beim Einsetzen in die Vorrichtung in Anlage gebracht werden kann.

Aus der US 4,427,253 A ist eine Klemme zum Verbinden von zwei Leitern bekannt, die zwei zusammensetzbare Gehäusehälften aufweist. Jede der beiden Gehäusehälften weist zwei Nuten auf, in welche die zu verbindenden Leiter einsetzbar sind. Quer zu den Nuten verlaufende, von den Gehäusehälften abtrennbare Zungen bilden eine Anschlagfläche für das Ende des in die jeweilige Nut einsetzbaren Leiters.

Aus der US 4,825,339 A ist bekannt, in der Wand eines Gehäuses einer elektronischen Einrichtung Schlitze vorzusehen, in welche ein Werkzeug einsetzbar ist zwecks Abhebeln und Ausbrechen eines vorbestimmten Teils der Wand.

Aus der US 2,000,851 A ist eine elektrische Verteilerdose und aus der US 2005/0103782 A1 ist eine Bewässerungsbox bekannt, deren Gehäusewände Öffnungen aufweisen, die im Ausgangszustand mit aus der Gehäusewand ausbrechbaren Abdeckkappen verschlossen sind.

Aus der DE 10 2005 018 812 A1 ist eine Gehäusewand eines Installationsgerätes mit einer Durchführung bekannt, die einen Durchführungsrand und ein Verschlusselement aufweist. Längs des Durchführungsrandes ist eine Perforation mit einem Perforationssteg vorgesehen, der eine Sollbruchstelle zum Entfernen des Verschlusselementes bildet.

Aus der EP 1 760 856 A1 ist ein Gehäuse für eine elektrische Verbindungseinrichtung zum Verbinden elektrischer Kabel bekannt, wobei ein Gehäuseteil Abdeckschilder aufweist, die abtrennbar sind und dadurch Gehäuseöffnungen zum Durchführen der elektrischen Kabel freigeben.

Aus der FR 2 744 851 A1 ist ein Gehäuse bestehend aus zwei Gehäusehälften bekannt, wobei Zugangsöffnungen in der Gehäusewand vorgesehen sind, die im Ausgangszustand durch an einer ersten Gehäusehälfte angebrachte Verschlusselemente abgedeckt sind. Nach dem Abtrennen eines Verschlusselements von der ersten Gehäusehälfte unter Freigabe der Zugangsöffnung kann das Verschlusselement in die zweite Gehäusehälfte eingesetzt werden.

Die US 2012/0097414 A1 zeigt eine korrosionsbeständige Verbindungsvorrichtung auf, bei der Öffnungen durch Laschen verschlossen sind, die durch Einstecken eines Kabelendes voneinander die Öffnung freigebend trennbar sind.

Der Erfindung liegt das Problem zugrunde, eine gattungsgemäße Vorrichtung bereitzustellen, die weiter verbesserte Gebrauchseigenschaften aufweist. In einer Ausführungsart soll die Montage der Vorrichtung weiter vereinfacht und die Sicherheit bei der Montage weiter erhöht sein. Dabei soll weiterhin eine dauerhafte und gute elektrische Verbindung zwischen dem Hauptleiter und dem jeweiligen Abzweigleiter gewährleistet sein.

Das Problem ist durch die im Anspruch 1 bestimmte Vorrichtung gelöst. Besondere Ausführungsarten der Erfindung sind in den Unteransprüchen bestimmt.

In einer Ausführungsart weist das Gehäuseteil an der Übergangsstelle eines Grundkörpers zu einem die Abdeckfläche bildenden elektrisch isolierenden Abdeckelement eine Sollbruchstelle auf, an der das Abdeckelement von dem Grundkörper abtrennbar ist und dadurch bei der Montage der Vorrichtung der Weg für das Einsetzen des Abzweigleiters freigebbar ist, und das Abdeckelement ist nach dem Abtrennen vom Grundkörper erneut mit der Vorrichtung verbindbar ist, indem es mit der Vorrichtung zusammensteckbar ist. Das Abdeckelement deckt während der Montage das metallisch blanke Ende des Abzweigleiters, insbesondere der Abzweigkabelader, isolierend ab und schützt so den Monteur vor einem unbeabsichtigten Berühren der möglicherweise bereits spannungsführenden Abzweigleiter.

Das Gehäuseteil kann insbesondere als Spritzgussteil hergestellt sein. Die angespritzte Bauform des Abdeckelements ermöglicht es, dass die Abdeckelemente überall dort abgetrennt und entfernt werden können, wo ein Abzweigleiter in die Vorrichtung eingeführt oder aus der Vorrichtung austreten soll. Bei der erfindungsgemäßen Lösung muss also nicht wie bei den bekannten Vorrichtungen die Lage der einseitig angebrachten Abdeckflächen bereits beim Setzen der Gehäuseteile beachtet werden; vielmehr kann erst nach dem Fixieren und Verrasten des Grundkörpers der Klemme in einer Vormontagestellung auf dem Hauptleiterkabel entschieden werden, ob der Abzweig nach der einen oder der anderen Richtung, gegebenenfalls auch nach beiden Richtungen, abgehen soll.

Die von dem Gehäuseteil ausgebildeten, den Abzweigleiterenden zugeordneten Abdeckelemente sollen erhalten bleiben und können beispielsweise als Anschlagfläche für die Abzweigadern dienen, während alle anderen Abdeckelemente für das Einsetzen der Abzweigleiter abgetrennt werden. Dadurch kann in einfacher Weise an einem beispielsweise vieradrigen Hauptleiterkabel zusätzlich zu einem nach einer Richtung abgehenden vieradrigen Abzweigkabel auch noch ein nach der anderen Richtung abgehendes, beispielsweise zweiadriges Abzweigkabel angeschlossen werden, indem dafür auf der anderen Abgangsseite nur zwei der insgesamt vier Abdeckelemente abgetrennt werden. Das Gehäuseteil und insbesondere der Grundkörper kann Abzweigleiter-Führungskanäle für das Einsetzen der Abzweigleiter aufweisen oder vorzugsweise einstückig ausbilden. Abdeckelemente sind dann mindestens an einem axialen Ende des Abzweigleiter-Führungskanals angeordnet.

In einer Ausführungsart ist das Abdeckelement an der Sollbruchstelle werkzeuglos von dem Grundkörper abtrennbar. Dadurch wird die Montage weiter vereinfacht. Das Abtrennen erfolgt zerstörungsfrei, insbesondere bleiben die Abdeckelemente in ihrer Form im Wesentlichen erhalten.

In einer Ausführungsart weist das Gehäuseteil für jeden Abzweigleiter ein separates Abdeckelement auf und die Abdeckelemente sind individuell für jeweils einen Abzweigleiter von dem Grundkörper abtrennbar. Das Gehäuseteil und insbesondere der Grundkörper kann an beiden Enden des Abzweigleiter-Führungskanals jeweils ein separates Abdeckelement aufweisen. Dadurch ist auf einfache Weise eine individuelle Anpassung der Vorrichtung an die Anzahl der Adern bzw. Leiter des Abzweigkabels vornehmbar. Alternativ hierzu können die Abdeckelemente auch paarweise oder gruppenförmig derart miteinander verbunden sein, dass mehrere Abdeckelemente gleichzeitig von dem Grundkörper abtrennbar sind.

In einer Ausführungsart weist das Gehäuseteil an oder nahe der beiden axialen Enden eines den Abzweigleiter aufnehmenden Abzweigleiter-Führungskanals des Grundkörpers Abdeckelemente auf. Auch dadurch ist auf einfache Weise eine individuelle Anpassung der Vorrichtung an die Anzahl der anzuschließenden Abzweigleiter vornehmbar. Alternativ hierzu kann das Gehäuseteil auch nur an oder nahe einem der beiden axialen Enden des Abzweigleiter-Führungskanals ein Abdeckelement aufweisen oder auch in einer Position zwischen den beiden axialen Enden, insbesondere mittig.

Vorzugsweise ist das Abdeckelement mit dem Grundkörper zusammensteckbar. Alle Abdeckelemente eines Grundkörpers können hinsichtlich ihrer Bauform und Größe identisch ausgebildet sein, und können beispielsweise nach dem Abtrennen werkzeuglos in dafür vorgesehene korrespondierende Öffnungen des Grundkörpers ohne Beeinträchtigung der Isoliereigenschaften an derselben oder einer anderen Stelle wieder eingesteckt werden. Dadurch ist auch bei einem versehentlichen Abtrennen einer Abdeckfläche eine nachträgliche Korrektur in einfacher Weise möglich, ohne den Schutzgrad gegen direktes Berühren der bei der weiteren Montage dort platzierten metallisch blanken Enden der Kabelabzweigadern beispielsweise durch einen Finger herabzusetzen. Die erneute Verbindung kann entweder an derselben Stelle oder an einer anderen Stelle des Grundkörpers erfolgen, beispielsweise an dem gegenüberliegenden axialen Ende des Abzweigleiter-Führungskanals oder auch an einer Zwischenposition, insbesondere mittig.

In einer Ausführungsart bildet das Abdeckelement nach dem Abtrennen vom Grundkörper einstückig mindestens ein Verbindungsmittel aus, das mit einem korrespondierenden Verbindungsmittel am Grundkörper derart zusammenwirkt, dass das Abdeckelement erneut mit dem Grundkörper verbindbar ist, vorzugsweise werkzeuglos. Das Verbindungsmittel kann beispielsweise in Form eines Steckmittels ausgebildet sein, beispielsweise kann das Abdeckelement einen Steckstift ausbilden, der in eine von dem Grundkörper ausgebildete Aufnahme einsteckbar ist. Die Verbindung kann lösbar sein, vorzugsweise werkzeuglos lösbar.

In einer Ausführungsart weisen das Abdeckelement und der Grundkörper miteinander zusammenwirkende Rastmittel auf, mittels denen das Abdeckelement nach dem Abtrennen vom Grundkörper erneut mit dem Grundkörper verrastend und vorzugsweise lösbar verbindbar ist. Beispielsweise kann das abgetrennte und steckbare Abdeckelement mittels eines Rasthakens in eine Aufnahmeöffnung am Grundkörper steckbar und dort rastend festgelegt sein. Ein Lösen der Verrastung kann beispielsweise durch Drehen des gesteckten Abdeckelements erfolgen, ohne dass hierfür ein Werkzeug erforderlich ist.

In einer Ausführungsart weist das Abdeckelement an seinem der Sollbruchstelle gegenüberliegenden Ende ein Verbindungsmittel auf, mit dem das Abdeckelement nach einem Abtrennen vom Grundkörper erneut mit dem Grundkörper verbindbar ist, insbesondere durch Einstecken des Verbindungsmittels in eine zugehörige Öffnung im Grundkörper. Dadurch ist sichergestellt, dass das Verbindungsmittel beim Abtrennen des Abdeckelements vom Grundkörper nicht beschädigt wird.

In einer Ausführungsart bildet das Abdeckelement eine im Wesentlichen flächige Abdeck- oder Isolierwand aus zum Abdecken und Isolieren des axialen Endes des zugehörigen Abzweigleiters. Die Abdeckwand kann Rippen oder Stege aufweisen, die randseitig in den Verbindungsmitteln zum erneuten Verbinden mit dem Grundkörper fortgeführt sind. Dadurch ist auch die Stabilität der Abdeckelemente erhöht.

In einer Ausführungsart weist das Abdeckelement eine Öffnung zum berührungssicheren elektrischen Kontaktieren des zugeordneten Abzweigleiters auf. Die Größe der Öffnung ist dabei derart, dass ein Berührschutz gewährleistet ist. Die Öffnung kann durch einen Schlitz in der Abdeckwand auf besonders einfache Weise realisiert werden.

Die Vorrichtung ist insbesondere für Energieversorgungskabel anwendbar, wie es beispielsweise für Hausanschlussleitungen eingesetzt wird, mit einer Querschnittsfläche des Hauptleiters zwischen 50 und 240 mm². Die Hauptleiter und/oder Abzweigleiter können ein- oder mehrdrähtig sein. Eine typische Anwendung der erfindungsgemäßen Vorrichtung ist bei einem drei- bzw. vierphasigen (einschließlich Erde) Energieversorgungskabel mit Betriebsspannungen kleiner 1000 V des Niederspannungs-Energieversorgungsnetzes.

Weitere Vorteile, Merkmale und Einzelheiten der Erfindung ergeben sich aus den Unteransprüchen sowie der nachfolgenden Beschreibung, in der unter Bezugnahme auf die Zeichnungen ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein.
- Fig. 1: zeigt eine perspektivische Ansicht eines ersten Ausführungsbeispieles einer erfindungsgemäßen Vorrichtung;
- Fig. 2: zeigt in vergrößerter Darstellung einen Ausschnitt aus der Ansicht der Fig. 1;
- Fig. 3: zeigt eine perspektivische Ansicht auf das Gehäuseteil mit abgetrenntem Abdeckelement;
- Fig. 4: zeigt eine perspektivische Ansicht auf das Gehäuseteil mit abgetrenntem und gedrehtem Abdeckelement; und
- Fig. 5: zeigt eine perspektivische Ansicht auf das Gehäuseteil mit abgetrenntem, gedrehtem und wieder gestecktem Abdeckelement.

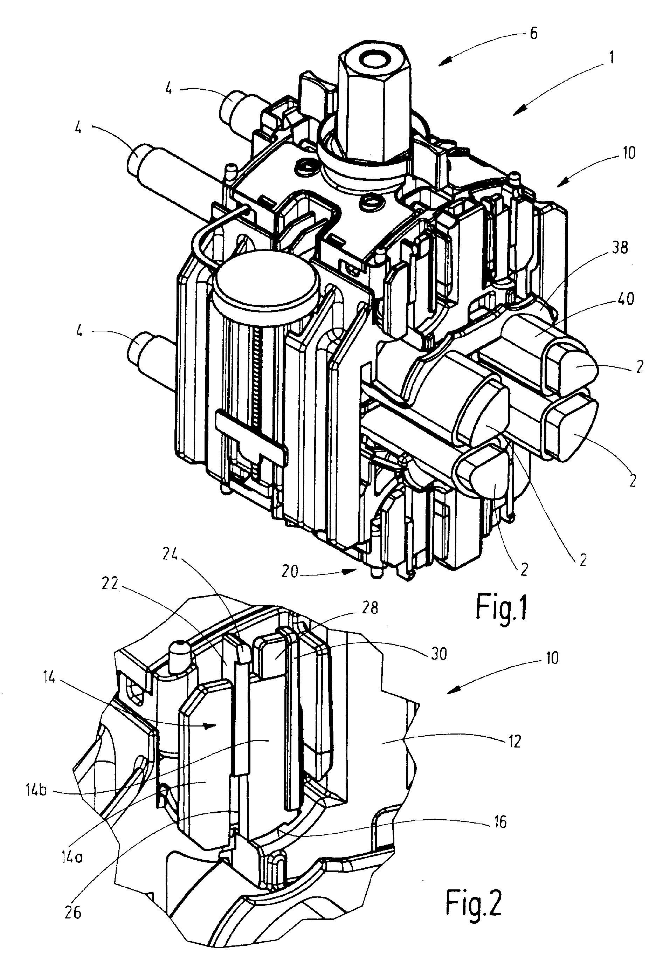

Die Fig. 1 zeigt eine perspektivische Ansicht eines ersten Ausführungsbeispieles einer erfindungsgemäßen Vorrichtung 1 zum elektrischen Verbinden von insgesamt vier isolierten Hauptleitern 2 eines Energieversorgungskabels mit jeweils einem isolierten Abzweigleiter 4, mit einem Gehäuse, das zwei durch eine Schraubverbindung 6 verbindbare Gehäuseteile 10, 20 aufweist, wobei für jede herzustellende Verbindung zwischen einem Hauptleiter 2 und dem zugeordneten Abzweigleiter 4 mindestens ein Kontaktelement in einem Gehäuseteil 10, 20 angeordnet ist. Da das erste Gehäuseteil 10 und das zweite Gehäuseteil 20 im dargestellten Ausführungsbeispiel als Gleichteile ausgebildet sind, wird nachfolgend nur das erste Gehäuseteil 10 beschrieben.

Das erste Gehäuseteil 10 ist aus einem Kunststoff, insbesondere aus einem faserfreien und/oder thermoplastischen sowie form- oder spritzbaren Kunststoff, vorzugsweise aus einem thermoplastischen spritzbaren Kunststoff, hergestellt. In der Fig. 1 ist eine Vormontagestellung dargestellt, in der die beiden Gehäuseteile 10, 20 verrastet zusammengesteckt sind, aber die innerhalb der Vorrichtung 1 angeordneten Kontaktelemente noch nicht in Anlage an den Hauptleitern 2 und den Abzweigleitern 4 sind. Diese Vormontagestellung wird eingenommen durch die Anlage eines einstückig von dem ersten Gehäuseteil 10 ausgebildeten Anschlagmittels 38, das an mehreren Stellen mit dem ersten Gehäuseteil 10 verbunden ist, an der Isolierung 40 der Hauptleiter 2. Beim Festziehen der Schraubverbindung 6 wird das Anschlagmittel 38 gegenüber dem ersten Gehäuseteil 10 ausgelenkt und durch die in die Isolierung 40 einschneidenden Kontaktelemente die elektrische Verbindung zwischen den Hauptleitern 2 und den jeweils zugeordneten Abzweigleitern 4 hergestellt.

Die Fig. 2 zeigt in vergrößerter Darstellung einen Ausschnitt aus der Ansicht der Fig. 1. Das Gehäuseteil 10 weist an der Übergangsstelle eines Grundkörpers 12 zu einem die Abdeckfläche bildenden elektrisch isolierenden Abdeckelement 14 eine linienförmige Sollbruchstelle 16 auf, an welcher das Abdeckelement 14 von dem Grundkörper 12 abtrennbar ist und dadurch bei der Montage der Vorrichtung 1 der Weg für das Einsetzen des Abzweigleiters 4 freigebbar ist. Das Abdeckelement 14 ist dabei im Wesentlichen flächig mit zwei im Wesentlichen rechteckförmigen Teilflächen 14a, 14b, zwischen denen ein Rastmittel 22 einstückig ausgebildet ist, das die Teilflächen 14a, 14b an den der Sollbruchstelle 16 gegenüberliegenden Endseiten überragt. Das Rastmittel 22 bildet endseitig einen axial bezogen auf den Verlauf der Hauptleiter 2 vorspringenden Rasthaken 24 aus.

In Verlängerung des Rastmittels 22 in Richtung auf die Sollbruchstelle 16 weist das Abdeckelement 14 eine Öffnung 26 zum berührungssicheren elektrischen Kontaktieren des hinter dem Abdeckelement 14 liegenden Abzweigleiters 4 auf. Die Öffnung 26 ist als fertigungstechnisch besonders einfach herzustellender endseitig offener Schlitz zwischen den beiden Teilflächen 14a, 14b des Abdeckelements 14 ausgebildet.

Die Sollbruchstelle 16 ist durch die Verbindungsstelle nur einer Teilfläche 14b des Abdeckelements 14 mit dem Grundkörper 12 gebildet. Dadurch ist die erforderliche Kraft für ein Abtrennen des Abdeckelements 14 reduziert, insbesondere kann das Abdeckelement 14 durch Verschwenken einfach von dem Grundkörper 12 abgetrennt werden. An dem der Sollbruchstelle 16 gegenüberliegenden Ende weist das Abdeckelement 14 einen die Teilfläche 14b endseitig überragenden Vorsprung 28 auf, der ebenso wie ein den Seitenrand der Teilfläche 14b überragender Steg 30 als Verbindungsmittel beim erneuten Verbinden des abgetrennten Abdeckelements 14 mit dem Grundkörper 12 dienen kann.

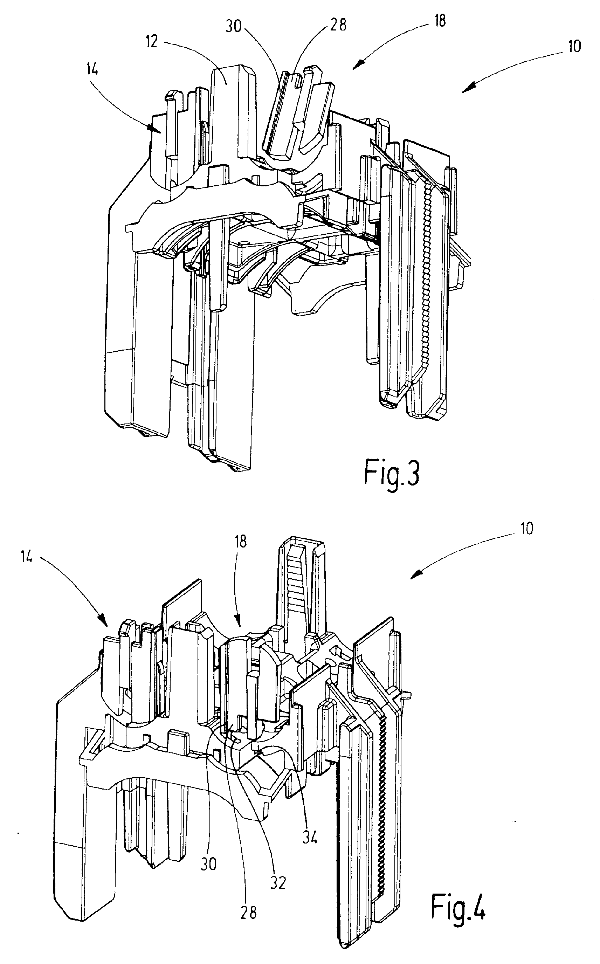

Die Fig. 3 zeigt eine perspektivische Ansicht auf das Gehäuseteil 10, das zum Zwecke der Übersichtlichkeit ohne das zweite Gehäuseteil 20 und ohne die Hauptleiter 2 und Abzweigleiter 4 dargestellt ist. Das in der Darstellung in der Fig. 3 linke Abdeckelement 14 ist dabei noch mit dem Grundkörper 12 verbunden. Demgegenüber ist das weitere, in der Darstellung rechte Abdeckelement 18 bereits vom Grundkörper 12 abgetrennt und seiner ursprünglichen Ausgangslage gekippt. In diesem Zustand kann das weitere Abdeckelement 18 entweder von der Vorrichtung 1 entfernt werden oder es kann erneut mit der Vorrichtung 1, insbesondere dem Grundkörper 12 des ersten Gehäuseteils 10, verbunden werden, insbesondere in diesen eingesteckt werden.

Die Fig. 4 zeigt eine perspektivische Ansicht des ersten Gehäuseteils 10 mit dem abgetrennten und gegenüber der Position der Fig. 3 um 180° gedrehten weiteren Abdeckelement 18. Der das Verbindungsmittel des weiteren Abdeckelements 18 bildende Vorsprung 28 und Steg 30 sind dadurch in Richtung auf den Grundkörper 12 ausgerichtet, insbesondere in Richtung auf eine im Querschnitt T-förmige Öffnung 32 im Grundkörper 12, die das Verbindungsmittel des Grundkörpers 12 zum erneuten Verbinden mit dem weiteren Abdeckelement 18 bildet.

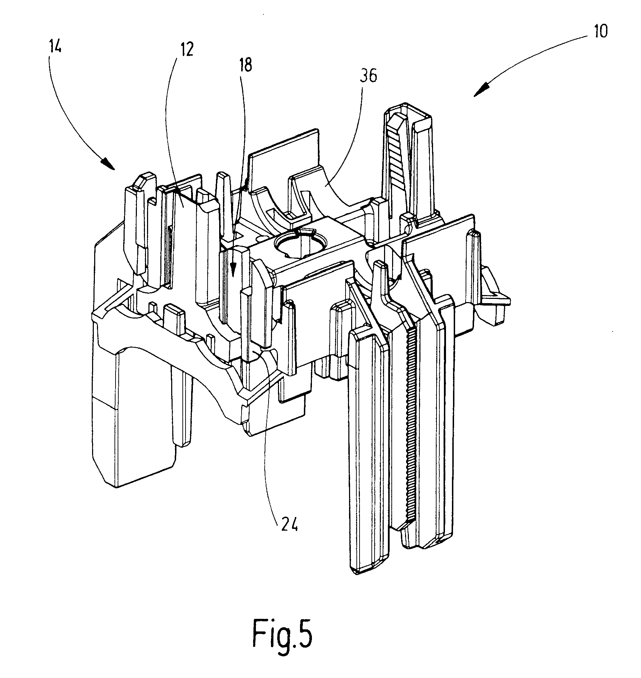

Die Fig. 5 zeigt eine perspektivische Ansicht auf das erste Gehäuseteil 10 in einem Zustand, in dem das weitere Abdeckelement 18 erneut mit dem Grundkörper 12 verbunden ist, indem der Vorsprung 28 und der Steg 30 des weiteren Abdeckelements 18 in die Öffnung 32 des Grundkörpers 12 so weit eingesteckt wurde, bis der Rasthaken 24 mit einer durch den Absatz 34 am Grundkörper 12 gebildeten Rastfläche verhakt. Aus dem in der Fig. 5 dargestellten Zustand kann das weitere Abdeckelement 18 durch Lösen der rastenden Verbindung, beispielsweise durch Drehen des weiteren Abdeckelements 18 bis der Rasthaken 24 nicht mehr in Anlage an der Rastfläche des Grundkörpers 12 ist, werkzeuglos von dem Grundkörper 12 gelöst werden.

In dem in der Fig. 5 dargestellten Zustand bilden beide Abdeckelemente 14, 18 eine berührungssichere Abdeckung für die Abzweigleiter 4, die in Abzweigleiter-Führungskanäle 36 einsetzbar sind, welche durch entsprechende Auflageflächen von dem Grundkörper 12 einstückig ausgebildet sind.

## Patentansprüche

1. Vorrichtung (1) zum elektrischen Verbinden von mindestens zwei Hauptleitern (2) eines Energieversorgungskabels mit jeweils mindestens einem Abzweigleiter (4), insbesondere Abzweigklemme für mehrphasige Niederspannungskabel, mit einem elektrisch isolierenden Gehäuseteil (10), das eine Abdeckfläche für einen in die Vorrichtung (1) einsetzbaren Abzweigleiter (4) aufweist, **dadurch gekennzeichnet, dass** das Gehäuseteil (10) an der Übergangsstelle eines Grundkörpers (12) zu einem die Abdeckfläche bildenden elektrisch isolierenden Abdeckelement (14) eine Sollbruchstelle (16) aufweist, an welcher das Abdeckelement (14) von dem Grundkörper (12) abtrennbar ist und dadurch bei der Montage der Vorrichtung (1) der Weg für das Einsetzen des Abzweigleiters (4) freigebbar ist, und dass das Abdeckelement (14) nach dem Abtrennen vom Grundkörper (12) erneut mit der Vorrichtung (1) verbindbar ist, indem es mit der Vorrichtung (1) zusammensteckbar ist.

2. Vorrichtung (1) nach Anspruch 1, **dadurch gekennzeichnet, dass** das Abdeckelement (14) an der Sollbruchstelle (16) werkzeuglos abtrennbar ist.

3. Vorrichtung (1) nach Anspruch 1 oder 2, **dadurch gekennzeichnet, dass** das Gehäuseteil (10) für jeden Abzweigleiter (4) ein separates Abdeckelement (14) aufweist, und dass die Abdeckelemente (14) individuell für jeweils einen Abzweigleiter (4) von dem Grundkörper (12) abtrennbar sind.

4. Vorrichtung (1) nach einem der vorangehenden Ansprüche, **dadurch gekennzeichnet, dass** das Gehäuseteil (10) an oder nahe den beiden axialen Enden eines den Abzweigleiter (4) aufnehmenden Abzweigleiter-Führungskanals (36) des Grundkörpers (12) Abdeckelemente (14) aufweist.

5. Vorrichtung (1) einem der vorangehenden Ansprüche, **dadurch gekennzeichnet, dass** das Abdeckelement (14) nach dem Abtrennen vom Grundkörper (12) erneut mit dem Grundkörper (12) verbindbar ist, vorzugsweise mit dem Grundkörper (12) zusammensteckbar ist.

6. Vorrichtung (1) nach einem der vorangehenden Ansprüche, **dadurch gekennzeichnet, dass** Abdeckelement (14) nach dem Abtrennen vom Grundkörper (12) mindestens ein Verbindungsmittel (28, 30) aufweist, das mit einem korrespondierenden Verbindungsmittel (32) am Grundkörper (12) derart zusammenwirkt, dass das Abdeckelement (14) erneut mit dem Grundkörper (12) verbindbar ist.

7. Vorrichtung (1) nach einem der vorangehenden Ansprüche, **dadurch gekennzeichnet, dass** das Abdeckelement (14) und der Grundkörper (12) miteinander zusammenwirkende Rastmittel (22, 34) aufweisen, mittels denen das Abdeckelement (14) nach dem Abtrennen vom Grundkörper (12) erneut mit dem Grundkörper (12) verrastend und vorzugsweise lösbar verbindbar ist.

8. Vorrichtung (1) nach einem der vorangehenden Ansprüche, **dadurch gekennzeichnet, dass** das Abdeckelement (14) an seinem der Sollbruchstelle (16) gegenüberliegenden Ende ein Verbindungsmittel (28, 30) aufweist, mit dem das Abdeckelement (14) nach einem Abtrennen vom Grundkörper (12) erneut mit dem Grundkörper (12) verbindbar ist, insbesondere durch Einstecken des Verbindungsmittels (28, 30) in eine zugehörige Öffnung (32) im Grundkörper (12).

9. Vorrichtung (1) nach einem der vorangehenden Ansprüche, **dadurch gekennzeichnet, dass** das Abdeckelement (14) eine im Wesentlichen flächige Abdeckwand ausbildet zum Abdecken des axialen Endes des zugeordneten Abzweigleiters (4).

10. Vorrichtung (1) nach einem der vorangehenden Ansprüche, **dadurch gekennzeichnet, dass** das Abdeckelement (14) eine Öffnung (26) zum berühungssicheren elektrischen Kontaktieren des zugeordneten Abzweigleiters (4) aufweist.

## Claims

1. A device (1) for electrically connecting at least two main conductors (2) of a power supply cable each having at least one branch conductor (4), in particular a branch terminal for multi-phase low voltage cables, comprising an electrically insulating housing part (10) that has a covering surface for a branch conductor (4) that can be inserted into the device (1), **characterised in that** at the cross-over point of a base body (12) to an electrically insulating covering element (14) forming the covering surface, the housing part (10) has a predetermined breaking point (16) at which the covering element (14) can be separated from the base body (12) and the path for the insertion of the branch conductor (4) can thus be cleared when fitting the device (1), and that the covering element (14) can be reconnected to the device (1) after separating from the base body (12) by it being able to be plugged together with the device (1).

2. The device (1) according to Claim 1, **characterised in that** the covering element (14) can be separated at the predetermined breaking point (16) without any tools.

3. The device (1) according to Claim 1 or 2, **characterised in that** the housing part (10) has a separate covering element (14) for each branch conductor (4) and that the covering elements (14) can be separated individually from the base body (12) for one branch conductor (4) respectively.

4. The device (1) according to any of the preceding claims, **characterised in that** the housing part (10) has covering elements (14) on or near to the two axial ends of a branch conductor guide channel (36) of the base body (12) receiving the branch conductor (4).

5. The device (1) according to any of the preceding claims, **characterised in that** the covering element (14) can be reconnected to the base body (12), and can preferably be plugged together with the base body (12), after separation from the base body (12).

6. The device (1) according to any of the preceding claims, **characterised in that**, after separating from the base body (12), the covering element (14) has at least one connection means (28, 30) that co-operates with a corresponding connection means (32) on the base body (12) such that the covering element (14) can be reconnected to the base body (12).

7. The device (1) according to any of the preceding claims, **characterised in that** the covering element (14) and the base body (12) have locking means (22, 34) co-operating with one another and by means of which, after separation from the base body (12), the covering element (14) can be reconnected to the base body (12) such as to lock and preferably to be releaseable.

8. The device (1) according to any of the preceding claims, **characterised in that** the covering element (14) has on its end opposite the predetermined breaking point (16) a connection means (28, 30) to which the covering element (14) can be reconnected to the base body (12) after separating from the base body (12), in particular by plugging the connection means (28, 30) into a corresponding opening (32) in the base body (12).

9. The device (1) according to any of the preceding claims, **characterised in that** the covering element (14) forms a substantially flat covering wall for covering the axial end of the assigned branch conductor (4).

10. The device (1) according to any of the preceding claims, **characterised in that** the covering element (14) has an opening (26) for contact-proof electrical contacting of the assigned branch conductor (4).

## Revendications

1. Dispositif (1) de liaison électrique d'au moins deux conducteurs (2) principaux d'un câble d'alimentation en électricité à respectivement au moins un conducteur (4) de dérivation, notamment une borne de dérivation pour un câble de basse tension polyphasée, comprenant une partie (10) de boîtier isolante électriquement, qui a une surface de recouvrement pour un conducteur (4) de dérivation pouvant être inséré dans le dispositif (1), **caractérisé en ce que** la partie (10) de boîtier a, au point de transition d'une pièce (12) de base à un élément (14) de recouvrement isolant électriquement formant la surface de recouvrement, un point (16) destiné à se rompre où l'élément (14) de recouvrement peut être séparé de la pièce (12) de base et ainsi, lors du montage du dispositif (1), la voie pour l'insertion du conducteur (4) de dérivation peut être dégagée, et **en ce que** l'élément (14) de recouvrement peut, après la séparation de la pièce (12) de base, être relié à nouveau au dispositif (1) en pouvant être enfiché avec le dispositif (1).

2. Dispositif (1) suivant la revendication 1, **caractérisé en ce que** l'élément (14) de recouvrement peut être séparé sans outil au point (16) destiné à se rompre.

3. Dispositif (1) suivant la revendication 1 ou 2, **caractérisé en ce que** la partie (10) de boîtier a, pour chaque conducteur (4) de dérivation, un élément (14) de recouvrement distinct et **en ce que** les éléments (14) de recouvrement peuvent être séparés de la pièce (12) de base individuellement pour respectivement un conducteur (4) de dérivation.

4. Dispositif (1) suivant l'une des revendications précédentes, **caractérisé en ce que** la partie (10) de boîtier a des éléments (14) de recouvrement sur ou près des deux extrémités axiales d'un canal (36) de la pièce (12) de base de guidage du conducteur de dérivation recevant le conducteur (4) de dérivation.

5. Dispositif (1) suivant l'une des revendications précédentes, **caractérisé en ce que** l'élément (14) de recouvrement peut, après la séparation de la pièce (12) de base, être relié à nouveau à la pièce (12) de base en pouvant, de préférence, être enfiché avec la pièce (12) de base.

6. Dispositif (1) suivant l'une des revendications précédentes, **caractérisé en ce que** l'élément (14) de recouvrement a, après la séparation de la pièce (12) de base, au moins un moyen (28, 30) de liaison, qui coopère avec un moyen (32) de liaison correspondant sur la pièce (12) de base, de manière à pouvoir relier l'élément (14) de recouvrement à nouveau à la pièce (12) de base.

7. Dispositif (1) suivant l'une des revendications précédentes, **caractérisé en ce que** l'élément (14) de recouvrement et la pièce (12) de base ont des moyens (22, 34) d'encliquetage coopérant entre eux, au moyen desquels l'élément (14) de recouvrement peut, après la séparation de la pièce (12) de base, s'encliqueter à nouveau à la pièce (12) de base et, de préférence, s'en détacher.

8. Dispositif (1) suivant l'une des revendications précédentes, **caractérisé en ce que** l'élément (14) de recouvrement a, à son extrémité opposée au point (16) destiné à se rompre, un moyen (28, 30) de liaison, par lequel l'élément (14) de recouvrement peut, après une séparation de la pièce (12) de base, être relié à nouveau à la pièce (12) de base, notamment par enfichage du moyen (28, 30) de liaison dans une ouverture (32) associée de la pièce (12) de base.

9. Dispositif (1) suivant l'une des revendications précédentes, **caractérisé en ce que** l'élément (14) de recouvrement constitue une paroi de recouvrement sensiblement plate pour le recouvrement de l'extrémité axiale du conducteur (4) de dérivation associé.

10. Dispositif (1) suivant l'une des revendications précédentes, **caractérisé en ce que** l'élément (14) de recouvrement a. une ouverture (26) pour la mise en contact électrique d'une manière sécurisée vis-à-vis du toucher du conducteur (4) de dérivation associé.
